# EUROPÄISCHE PATENTSCHRIFT

(11) **EP 2 366 540 B1**
(45) Veröffentlichungstag und Bekanntmachung des Hinweises auf die Patenterteilung: **25.07.2018**
(21) Anmeldenummer: 11156473.8
(22) Anmeldetag: 01.03.2011
(51) Int. Cl.: B32B 5/18, B32B 27/18, B32B 27/20, B32B 27/32, A47B 96/20, B29C 63/00, B29C 65/16, B29C 65/02, B29C 65/14, B29C 65/48, B29C 65/50, B29L 31/44, B29C 47/00, A47B 13/08, B29C 65/00, B29C 47/06, B29L 9/00, B32B 7/12, B32B 15/08, B32B 27/08

(54) **Kantenleiste aus thermoplastischem Kunststoffmaterial, insbesondere für Möbelplatten**
Edge strip from thermoplastic synthetic material, in particular for furniture panels
Baguette de bordure en matière synthétique thermoplastique, notamment pour panneaux de meubles

(30) Priorität: 15.03.2010 DE 102010011438; 13.04.2010 DE 102010014776
(43) Veröffentlichungstag der Anmeldung: 21.09.2011
(73) Patentinhaber: MKT Moderne Kunststoff-Technik Gebrüder Eschbach Gmbh, 99885 Ohrdruf/Thüringen (DE)
(72) Erfinder: Streichhardt, Thomas, 48231 Warendorf (DE)
(74) Vertreter: Maikowski & Ninnemann Patentanwälte Partnerschaft mbB

(56) Entgegenhaltungen:
- EP-A1- 1 163 864
- EP-A1- 1 852 242
- WO-A1-2009/026977
- WO-A1-2010/009805
- DD-A1- 124 170

## Beschreibung

Die Erfindung betrifft eine Kantenleiste aus thermoplastischem Kunststoffmaterial gemäß Oberbegriff des Anspruches 1, welche mit der Rückseite auf Möbelplatten oder dergleichen klebstofffrei fixierbar ist.

Derartige Kantenleisten werden auch als Kanten, Kantenbänder oder Deckleisten bezeichnet. Bei den Platten handelt es sich vorzugsweise um Holzwerkstoffplatten, z.B. Spanplatten oder Faserplatten (u.a. MDF-Platten), die für Möbel eingesetzt werden.

Es ist bekannt, zur Fixierung von Kantenleisten an den Schmalseiten von Möbelplatten Schmelzklebstoffe unmittelbar in der so genannten Kantenanleimmaschine einzusetzen. Die Schmelzklebstoffe werden dabei auf die Kantenleiste und / oder auf die Möbelplatte aufgetragen. Dieses Verfahren besitzt den Nachteil, dass primär bedingt durch den Schmelzklebstoff eine sichtbare Fuge zwischen Kantenleiste und Möbelplatte entsteht, die im Gebrauch des Möbels verschmutzungs- und feuchtigkeitsempfindlich ist. Da der Auftrag des Schmelzklebstoffes durch Walzen, Rakeln oder mittels Düsenauftrag erfolgt, ist der Auftrag ungleichmäßig und birgt die Gefahr von fehlerhaften Verklebungen. Ferner ist dieses Verfahren durch das Aufschmelzen des Schmelzklebstoffes energieaufwendig.

In der DE 102006021171 A1 bzw. EP1852242 B1 wird ein als Deckleiste bezeichnetes Kantenband beschrieben, welches zur Anbringung auf ein plattenförmiges Werkstück vorgesehen ist und aus einem extrudierbaren thermoplastischen Kunststoff besteht.

Hierbei wird die Klebstoffschicht in Form eines Schmelzklebstoffes durch Coextrusion auf eine Kantenleiste aufgetragen. Die Befestigung der Kantenleiste an die Möbelplatte erfolgt durch Aufschmelzen oder Aktivieren der Schmelzklebstoffschicht durch Laserstrahlung unmittelbar im Zuge der Befestigung der Kantenleiste an die Möbelplatte in der Kantenanleimmaschine.

Aus der EP 1163864 B1 ist eine klebstofffreie Verbindung zwischen einer Kantenleiste, die aus Kunststoffschichten unterschiedlicher Härte besteht, und einer Möbelplatte bekannt. Die Oberfläche der Kunststoffkante wird durch Laserstrahlung in der Kantenanleimmaschine aufgeschmolzen, so dass eine Laserschweißverbindung der Kantenleiste mit der Möbelplatte erfolgt.

Die DE 202007011911 U1 beschreibt ebenfalls eine thermoplastische Kantenleiste, die eine coextrudierte Schmelzschicht aufweist, welche mittels Laserstrahlung aufgeschmolzen und somit an Möbelplatten verbunden werden kann. Die Schmelzschicht weist dafür eine abweichende chemische Basis und einen geringeren Schmelzpunkt auf als die Strukturschicht bzw. Oberseite der Kantenleiste.

Alle zuvor genannten Verfahren besitzen in der Praxis den gravierenden Nachteil, dass solche Kantenleisten sowohl mit Schmelzklebstoffschichten als auch mit Schmelzschichten nach der Befestigung der Kantenleiste an eine Möbelplatte bei der nachfolgenden spanenden Bearbeitung der Kantenleiste durch, z.B. Fräsen ein inhomogenes Zerspanungsverhalten bedingt durch unterschiedliche Härten bzw. unterschiedliche Schmelzpunkte und/oder aufgrund stark abweichender Basis-Polymere in den Schichten der Kantenleiste aufweisen. Dadurch entstehen unterschiedliche Oberflächenstrukturen der Schichten, welche sichtbar sind und visuell negativ beurteilt werden. Dieser Nachteil fällt insbesondere bei den Eckverbindungen der Kantenleisten an einer Möbelplatte sowie bei nachträglichen Überlackierungen der bekanteten Möbelplatte ins Gewicht.

Der Erfindung liegt daher die Aufgabe zugrunde, eine Kantenleiste aus thermoplastischem Kunststoff insbesondere für Möbelplatten zu schaffen, die sich durch ein homogenes Zerspanungsverhalten der gesamten Kantenleiste auszeichnet und die sich klebstofffrei und ohne optisch erkennbare Fuge an einer Möbelplatte befestigen lässt.

Die Lösung der Aufgabe der Erfindung erfolgte durch eine Kantenleiste mit der Merkmalskombination gemäß Anspruch 1, wobei die Unteransprüche zweckmäßige Ausgestaltungen und Weiterbildungen umfassen.

Die Erfindung stellt demnach eine Kantenleiste bereit, die als mehrschichtige, klebstofffreie Kantenleiste über eine im SchmelzeZustand extrem leicht fließende Schmelzschicht verfügt, die eine vergleichbare Härte und Schmelztemperatur zu den anderen Schichten besitzt, so dass die gesamte Kantenleiste eine konstante Härte und Schmelztemperatur aufweist, wobei die Kantenleiste aus einer Oberschicht aus Polymeren, nämlich Homopolypropylen sowie einer coextrudierten Schmelzschicht besteht, die auf einem leicht fließenden Polymer gleicher chemischer Basis, nämlich Homopolypropylen mit einem Schmelzflussindex (MFI) oberhalb von 25 g/10 min, vorzugsweise oberhalb von 50 g/10 min (nach ISO 1133, 230°C, 2,16 kg) basiert. Diese Schicht ist durch Energiezufuhr durch z.B. Laserstrahlung oder Plasma aufschmelzbar, so dass die Kantenleiste an Möbelplatten ohne Klebstoffzugabe befestigt werden kann. Die Schmelzschicht ist bei einer Ausgestaltung der Erfindung eingefärbt.

Die Kantenleiste besteht bei einem Ausführungsbeispiel aus eingefärbtem Homopolypropylen.

Die Dicke der Kantenleiste liegt vorzugsweise im Bereich von im Wesentlichen 0,3 bis 4 mm. Die sichtbare Oberseite der eingefärbten Kantenleiste kann geprägt und / oder bedruckt und / oder lackiert und /oder mit einer Kunststoff- bzw. Metallfolie laminiert sein.

Ferner sind so genannte Durchmaserungs-Effekte in den Schichten möglich. Durchmaserungseffekte werden bekannterweise durch Coextrusion des gleichen Polymers in andersfarbiger Einstellung oder durch eine inhomogene Farbmittelverteilung erzeugt. Die andersfarbige, streifige Verteilung optimiert die optische Reproduktion von Holzdekoren.

Eine weitere bevorzugte Ausführung der Erfindung betrifft eine zwei-oder mehrschichtige Kantenleiste, die durch Coextrusion gefertigt wird. Die Coextrusion der Schmelzschicht kann sowohl in einem Prozeß unmittelbar mit der Extrusion der anderen Schichten und / oder durch eine nachträgliche Post-Coextrusion erfolgen.

Vorteilhaft stellte sich auch eine Laminierung der Schmelzschicht in einem zweistufigen Prozeß dar. Im ersten Fertigungsschritt wird die Schmelzschicht als Folie extrudiert. Anschließend erfolgt die Laminierung dieser Folie auf die Rückseite der Kantenleiste. Der feste Verbund der Schichten bei dieser Laminierung wird durch Temperatur und Druck in einem Glättwerk erzeugt.

Ferner kann die Schmelzschicht durch eine flüssige Beschichtung, die durch Vernetzung oder Trocknung fest wird, erzeugt werden. Eine solche zwei-oder mehrschichtige Ausführung besitzt den Vorteil, dass die Schmelzschicht, die Zwischenschichten und die Oberschicht getrennt nach ihren Funktionen formuliert werden können. Die Zwischenschichten können als Haftungsvermittler zwischen unverträglichen, durch Coextrusion nicht kombinierbaren Polymeren fungieren.

Die Erfindung schlägt bevorzugt eine zweischichtige Kantenleiste vor, bestehend aus einer Oberschicht der o.g. Polymeren insbesondere Homopolypropylen sowie einer coextrudierten Schmelzschicht, die auf einem leicht fließenden Polymer gleicher chemischer Basis insbesondere Homopolypropylen mit einem Schmelzflußindex (MFI) oberhalb von 25 g/10 min, vorzugsweise oberhalb von 50 g/10 min (nach ISO 1133, 230°C, 2,16 kg) basiert.

Durch die Verwendung der gleichen Polymerbasis in der Oberschicht und in der Schmelzschicht ist das Zerspanungsverhalten, die Härte und die Erweichungstemperatur der gesamten Kantenleiste sehr homogen, so dass visuell keine Unterschiede in Farbe, Glanz und/oder Struktur im Ergebnisder spanenden Bearbeitung der Kantenleiste nach der Befestigung an der Möbelplatte erkennbar sind.

Die Verwendung von leicht fließenden Polymeren für die Schmelzschicht besitzt den Vorteil, dass das Polymer der Schmelzschicht im Schmelzezustand in das offenporige Gefüge der Möbelplatte fließt und sich darin mechanisch gut verankern kann. Somit werden hohe Verklebungsqualitäten erzielt.

Ferner entsteht eine geschlossene Fuge zwischen Kantenleiste und Möbelplatte, so dass eine hohe Beständigkeit gegen Feuchtigkeit und damit gegen Quellungen der Möbelplatte durch Wasseraufnahme sowie Anhaftung von Schmutz erzielt wird.

Für eine optimale Absorption der Laserstrahlung und Umwandlung der Laserstrahlung in Wärmeenergie bzw. Absorption der Plasmaenergie können Energie absorbierende Zusatzstoffe, vorzugsweise Licht und/oder Strahlung sowie Wärme absorbierende Zusatzstoffe z.B. Laserpigmente, mineralische Füllstoffe oder Metallpartikel eingesetzt werden. Dieses hat den Vorteil, dass die Energieabsorption und damit das Aufschmelzverhalten der Schmelzschicht gezielt auf die Energiequelle z.B. Wellenlänge der Laserstrahlung abgestimmt werden kann.

Eine weitere Ausführung betrifft eine Kantenleiste nach einer der vorgenannten Ausführungen, wobei auf die Schmelzschicht der Kantenleiste eine flüssige Beschichtung aufgetragen wird, die Energie absorbierenden Zusatzstoffe enthält und thermisch und/oder chemisch getrocknet bzw. vernetzt wird. Die flüssige Beschichtung kann dafür sowohl vollflächig als auch nur in Teilflächen oder Bereichen auf die Schmelzschicht erfolgen. Damit können gezielt, räumlich definierte Bereiche der Schmelzschicht mit der Energiequelle bei der Verarbeitung aufgeschmolzen werden, so dass der Verbund zwischen Kantenleiste und Möbelplatte ebenfalls positionsgenau definierbar ist.

Zur besseren Anbindung der Additive und insbesondere von mineralischen Füllstoffen an die Polymerbasis und zur gleichzeitigen Steigerung der Haftungskräfte der Kantenleiste an Holzwerkstoffen kann die Schmelzschicht bekannterweise mit Additiven mit funktionalen Gruppen wie z.B. Maleinsäureanhydrid oder auf Basis von Isocyanat versetzt werden.

Eine weitere bevorzugte Ausführung der Erfindung betrifft eine Kantenleiste nach einer der vorgenannten Ausführungen, wobei die Schmelzschicht und / oder die Zwischenschichten eine Schaumstruktur aufweist. Die Schaumstruktur kann sowohl durch physikalisches als auch durch chemisches Schäumen der polymeren Schicht erzeugt werden. Es zeigte sich, dass die Energieaufnahme der Schmelzschicht (z.B. nach Laserstrahlung) erhöht wird. Dadurch kann bei gleicher Verklebungsgüte die Energieleistung (z.B. des Lasers) reduziert und / oder die Vorschubgeschwindigkeit des Fügeprozesses erhöht und / oder die Konzentration der Energie absorbierenden Additive reduziert werden. Alle vorgenannten Maßnahmen führen zu einer Kostensenkung.

## Patentansprüche

1. Kantenleiste aus thermoplastischem Kunststoffmaterial in mehrschichtiger Struktur, insbesondere für Möbelplatten, wobei diese über eine im Schmelzzustand hoch fließfähige Schmelzschicht verfügt, die eine vergleichbare Schmelztemperatur zu mindestens einer Oberschicht besitzt, **dadurch gekennzeichnet, dass**
durch die Verwendung der gleichen Polymerbasis in der Oberschicht und in der Schmelzschicht das spätere Zerspanungsverhalten, die Härte und die Erweichungstemperatur der gesamten Kantenleiste homogen einstellbar ist, wodurch visuelle Unterschiede in Farbe, Glanz und/oder Struktur im Ergebnis der spanenden Bearbeitung der Kantenleiste nach der Befestigung an der Möbelplatte vermeidbar sind, wobei die Kantenleiste aus einer Oberschicht aus Polymeren, nämlich Homopolypropylen sowie einer coextrudierten Schmelzschicht besteht, die auf einem leicht fließenden Polymer gleicher chemischer Basis, nämlich Homopolypropylen mit einem Schmelzflussindex (MFI) oberhalb von 25 g/10 min, vorzugsweise oberhalb von 50 g/10 min
(nach ISO 1133, 230°C, 2,16 kg) basiert.

2. Kantenleiste nach Anspruch 1,
**dadurch gekennzeichnet, dass**
die Dicke der Kantenleiste vorzugsweise im Bereich von im Wesentlichen 0,3 bis 4 mm liegt und die sichtbare Oberseite geprägt und / oder bedruckt und / oder lackiert und /oder mit einer Kunststoff- bzw. Metallfolie laminiert ist.

3. Kantenleiste nach einem der vorangegangenen Ansprüche,
**dadurch gekennzeichnet, dass**
diese Durchmaserungen, erhalten durch Koextrusion des gleichen Polymers in andersfarbiger Einstellung oder durch eine inhomogene Farbmittelverteilung, aufweist.

4. Kantenleiste nach einem der vorangegangenen Ansprüche,
**dadurch gekennzeichnet, dass**
diese zweischichtig durch Koextrusion gefertigt ist, wobei die Koextrusion der Schmelzschicht sowohl in einem Prozeß unmittelbar mit der Extrusion der anderen Schichten und / oder durch eine nachträgliche Post-Koextrusion und/oder durch eine Laminierung der Schmelzschicht als Folie auf die andere Schicht erfolgt.

5. Kantenleiste nach einem der vorangegangenen Ansprüche,
**dadurch gekennzeichnet, dass**
bei einer zweischichtigen Ausführung mindestens eine Zwischenschicht vorgesehen ist, welche als Haftvermittler zwischen unverträglichen, durch Koextrusion nicht kombinierbaren Polymeren fungiert.

6. Kantenleiste nach einem der vorangegangenen Ansprüche,
**dadurch gekennzeichnet, dass**
für eine optimale Absorption von Laserstrahlung und Umwandlung der Laserstrahlung in Wärmeenergie bzw. Absorption von zugeführter Plasmaenergie Energie absorbierende Zusatzstoffe und/oder Pigmente, vorzugsweise Licht und/oder Strahlung sowie Wärme absorbierende Zusatzstoffe, mineralische Füllstoffe oder Metallpartikel der Schmelzschicht zugesetzt werden.

7. Kantenleiste nach einem der vorangegangenen Ansprüche,
**dadurch gekennzeichnet, dass**
auf die Schmelzschicht der Kantenleisten eine flüssige Beschichtung aufgetragen wird, die Energie absorbierende Zusatzstoffe und/oder Pigmente, vorzugsweise Licht und/oder Strahlung sowie Wärme absorbierende Zusatzstoffe, mineralische Füllstoffe oder Metallpartikel enthält und thermisch und/oder chemisch getrocknet bzw. vernetzt ist, wobei die flüssige Beschichtung sowohl vollflächig als auch nur in Teilflächen oder Bereichen auf die Schmelzschicht erfolgt, um gezielt räumlich definierte Bereiche der Schmelzschicht mit der Energiequelle bei der Verarbeitung aufschmelzen zu können, so dass der Verbund zwischen Kantenleiste und Möbelplatte positionsgenau definierbar ist.

8. Kantenleiste nach einem der Ansprüche 5 bis 7, **dadurch gekennzeichnet, dass**
die Schmelzschicht und / oder die Zwischenschichten eine Schaumstruktur aufweist.

## Claims

1. Edging strip made of thermoplastic polymeric material in multi-layer structure, in particular for furniture panels, the strip possessing a melt layer which is highly fluid in the melt state and possesses a melting temperature comparable with that of at least one upper layer, **characterized in that** use of the same polymer basis in the upper layer and in the melt layer can establish homogeneity of subsequent machining performance, of hardness and of softening temperature of the entire edging strip, thus permitting avoidance of visual differences in the colour, gloss and/or structure in the product from machining of the edging strip after fixing on the furniture panel, where the edging strip consists of an upper layer of polymers, specifically homopolypropylene, and of a coextruded melt layer based on a free-flowing polymer having the same chemical basis, specifically homopolypropylene having a melt flow index (MFI) of more than 25 g/10 min, preferably more than 50 g/10 min (in accordance with ISO 1133, 230°C, 2.16 kg).

2. Edging strip according to Claim 1, **characterized in that** the thickness of the edging strip is preferably in the range of in essence from 0.3 to 4 mm and the visible upper side has been laminated with a plastics foil or with a metal foil, and/or has been embossed and/or printed and/or coated.

3. Edging strip according to either of the preceding claims, **characterized in that** this strip has bulk patterning present by virtue of coextrusion of the same polymer in a differently coloured formulation or via inhomogeneous colorant distribution.

4. Edging strip according to any of the preceding claims, **characterized in that** this strip has been manufactured in the form of two layers by coextrusion, where the coextrusion of the melt layer takes place in a process directly with the extrusion of the other layers and/or via subsequent post-coextrusion and/or via lamination of the melt layer as foil onto the other layer.

5. Edging strip according to any of the preceding claims, **characterized in that** in the case of a two-layer embodiment there is at least one intermediate layer provided which functions as an adhesion promoter between incompatible polymers that cannot be combined via coextrusion.

6. Edging strip according to any of the preceding claims, **characterized in that** for ideal absorption of laser radiation and conversion of the laser radiation into heat and, respectively, absorption of plasma energy introduced, pigments and/or additional substances that absorb energy have been added to the melt layer, preferably additional substances that absorb light and/or radiation and also heat, or mineral fillers or metal particles.

7. Edging strip according to any of the preceding claims, **characterized in that** a liquid coating is applied onto the melt layer of the edging strips and comprises pigments and/or additional substances that absorb energy, preferably additional substances that absorb light and/or radiation and also heat, or mineral fillers or metal particles, and is thermally and/or chemically dried and, respectively, crosslinked, where the liquid coating takes place to the melt layer over the entire surface or else only in some areas or in regions, for enabling achievement of melting, specifically, of spatially defined regions of the melt layer by the energy source during processing, in such a way that the position of the bond between edging strip and furniture panel can be precisely defined.

8. Edging strip according to any of Claims 5 to 7, **characterized in that** the melt layer and/or the intermediate layers has/have a foam structure.

## Revendications

1. Baguette de bordure en matériau plastique thermoplastique de structure multicouche, notamment pour panneaux de meubles, celle-ci disposant d'une couche de fusion hautement fluide à l'état fondu, qui présente une température de fusion comparable à au moins une couche supérieure, **caractérisée en ce que**
par l'utilisation de la même base polymère dans la couche supérieure et dans la couche de fusion, le comportement d'usinage ultérieur, la dureté et la température de ramollissement de l'ensemble de la baguette de bordure sont ajustables de manière homogène, de telle sorte que des différences visuelles de couleur, de brillance et/ou de structure dans le résultat de l'usinage de la baguette de bordure après la fixation sur le panneau de meuble peuvent être évitées, la baguette de bordure étant constituée par une couche supérieure en polymère, à savoir un homopolypropylène, ainsi que d'une couche de fusion coextrudée, qui est à base d'un polymère fluide de même base chimique, à savoir un homopolypropylène ayant un indice de fluidité (MFI) supérieur à 25 g/10 minutes, de préférence supérieur à 50 g/10 minutes (selon ISO 1133, 230 °C, 2,16 kg).

2. Baguette de bordure selon la revendication 1, **caractérisée en ce que** l'épaisseur de la baguette de bordure se situe de préférence dans la plage allant d'essentiellement 0,3 à 4 mm, et le côté supérieur visible est gaufré et/ou imprimé et/ou verni et/ou stratifié avec un film en plastique ou en métal.

3. Baguette de bordure selon l'une quelconque des revendications précédentes, **caractérisée en ce que** celle-ci comprend des grains du bois obtenus par coextrusion du même polymère dans une préparation d'une autre couleur ou par une distribution inhomogène de colorants.

4. Baguette de bordure selon l'une quelconque des revendications précédentes, **caractérisée en ce que** celle-ci est fabriquée à deux couches par coextrusion, la coextrusion de la couche de fusion ayant lieu aussi bien dans un procédé directement avec l'extrusion des autres couches et/ou par une post-coextrusion ultérieure et/ou par une stratification de la couche de fusion en tant que film sur l'autre couche.

5. Baguette de bordure selon l'une quelconque des revendications précédentes, **caractérisée en ce que**, lors d'une configuration à deux couches, au moins une couche intermédiaire est prévue, qui fonctionne en tant que promoteur d'adhésion entre des polymères incompatibles, ne pouvant pas être combinés par coextrusion.

6. Baguette de bordure selon l'une quelconque des revendications précédentes, **caractérisée en ce que**, pour une absorption optimale d'un rayonnement laser et une conversion du rayonnement laser en énergie thermique ou une absorption de l'énergie plasma introduite, des additifs absorbant l'énergie et/ou des pigments, de préférence des additifs absorbant la lumière et/ou les rayonnements, ainsi que la chaleur, des charges minérales ou des particules métalliques sont ajoutés à la couche de fusion.

7. Baguette de bordure selon l'une quelconque des revendications précédentes, **caractérisée en ce qu'**un revêtement liquide est appliqué sur la couche de fusion de la baguette de bordure, qui contient des additifs absorbant l'énergie et/ou des pigments, de préférence des additifs absorbant la lumière et/ou les rayonnements, ainsi que la chaleur, des charges minérales ou des particules métalliques, et est séchée ou réticulée thermiquement et/ou chimiquement, le revêtement liquide ayant lieu aussi bien sur l'ensemble de la surface qu'uniquement dans des surfaces partielles ou des zones sur la couche de fusion, afin de pouvoir fondre de manière ciblée des zones définies dans l'espace de la couche de fusion avec la source d'énergie lors de l'usinage, de sorte que le composite puisse être défini à une position exacte entre la baguette de bordure et le panneau de meuble.

8. Baguette de bordure selon l'une quelconque des revendications 5 à 7, **caractérisée en ce que** la couche de fusion et/ou les couches intermédiaires présentent une structure en mousse.
